# FASCICULE DE BREVET EUROPEEN

(11) **EP 2 759 054 B1**
(45) Date de publication et mention de la délivrance du brevet: **27.02.2019**
(21) Numéro de dépôt: 12767058.6
(22) Date de dépôt: 11.09.2012
(51) Int. Cl.: H02P 9/10, H02P 9/48

(54) **PROCEDE ET SYSTEME DE CONTROLE DE LA CHARGE PROGRESSIVE D'UN ALTERNATEUR DE VEHICULE AUTOMOBILE, ET ALTERNATEUR DE VEHICULE AUTOMOBILE COMPRENANT UN TEL SYSTEME**
VERFAHREN UND SYSTEM ZUR ÜBERWACHUNG DES LADUNGSFORTSCHRITTS DER LICHTMASCHINE EINES KRAFTFAHRZEUGS UND KRAFTFAHRZEUG-LICHTMASCHINE MIT EINEM SOLCHEN SYSTEM
METHOD AND SYSTEM FOR MONITORING THE PROGRESSIVE CHARGING OF AN AUTOMOBILE ALTERNATOR, AND AUTOMOBILE ALTERNATOR COMPRISING SUCH A SYSTEM

(30) Priorité: 20.09.2011 FR 1158332
(43) Date de publication de la demande: 30.07.2014
(73) Titulaire: Valeo Equipements Electriques Moteur, 94046 Créteil Cedex (FR)
(72) Inventeur: BERNARD, François-Xavier, F-94000 Creteil (FR); MATT, Jean-Claude, F-21000 Dijon (FR)
(86) Numéro de dépôt international: PCT/FR2012/052021
(87) Numéro de publication internationale: WO 2013/041794

(56) Documents cités:
- DE-A1-102007 044 591
- FR-A1- 2 909 815
- US-A- 6 137 247
- US-A1- 2008 191 482
- US-A1- 2009 039 838

## Description

### DOMAINE TECHNIQUE DE L'INVENTION.

La présente invention concerne un procédé de contrôle de la charge progressive d'un alternateur destiné à être accouplé à un moteur thermique de véhicule automobile. L'invention concerne également un système apte à la mise en oeuvre de ce procédé, ainsi que l'alternateur comprenant ce système.

### ARRIERE PLAN TECHNOLOGIQUE DE L'INVENTION.

Dans le domaine de l'automobile, il est bien connu de maintenir une tension fournie au réseau électrique de bord par un alternateur du véhicule à une valeur de consigne prédéterminée, indépendamment de la vitesse de rotation du moteur ou de la consommation électrique des équipements, au moyen d'un dispositif de régulation dit « régulateur ».

Ce régulateur, généralement intégré à l'alternateur, contrôle un courant d'excitation fourni par une batterie et circulant dans un enroulement d'excitation de l'alternateur.

De nos jours, les équipementiers de l'automobile ont développé des alternateurs très performants en mettant en oeuvre des systèmes électroniques de puissance contrôlés par des circuits faisant appel à des techniques numériques, reposant notamment sur l'utilisation de microprocesseurs ou microcontrôleurs.

Ces techniques permettent une bien meilleure stabilisation de la tension du réseau de bord que les bilames d'autrefois en réponse à l'activation de charges électriques importantes dans le véhicule.

Cependant, on conçoit qu'une demande d'augmentation du courant d'excitation par le système de régulation ne doive pas conduire à un accroissement rapide du couple prélevé par l'alternateur sur le moteur thermique, susceptible de caler celui-ci, notamment quand le moteur thermique fonctionne au ralenti ou à froid, au démarrage du véhicule.

Il est donc connu de limiter le couple résistant prélevé par un alternateur par une fonction de charge progressive dite "LRC" (acronyme de la dénomination anglaise "Load Response Control").

Le contrôle de l'intensité du courant d'excitation est généralement obtenu par la variation du rapport cyclique d'un signal d'excitation de type PWM (pour "Pulse Width Modulation" en terminologie anglaise) commandant un commutateur de puissance du circuit d'excitation.

De manière connue, et comme suite à une détection d'un appel de charge, la fonction LRC n'autorise que des augmentations progressives du rapport cyclique du signal d'excitation à partir de la valeur initiale jusqu'à la valeur déterminée par la boucle de régulation, en incrémentant cette valeur initiale en faisant appel à un signal intermédiaire dit de "retour de charge progressive".

De manière également connue, le signal d'excitation commandant effectivement le circuit d'excitation résulte du multiplexage du signal de demande d'excitation généré par la boucle de régulation et du signal d'excitation produit par la fonction LRC, sous le contrôle de la fonction LRC.

Mais le type de fonction LRC décrit ci-dessus est simplement une action en boucle ouverte systématique qui n'interagit pas vraiment avec une modification de la tension de bord ou de la vitesse de rotation du moteur.

Dans ces conditions, l'unité électronique de contrôle du moteur peut avoir des difficultés à stabiliser le régime moteur au ralenti.

### DESCRIPTION GENERALE DE L'INVENTION.

La présente invention vise par conséquent à pallier cet inconvénient.

Elle a précisément pour objet un procédé de contrôle de la charge progressive d'un alternateur de véhicule automobile destiné à être accouplé à un moteur thermique du véhicule.

De manière connue, un alternateur de ce type est apte à produire une tension d'alimentation d'un réseau de bord du véhicule asservie à une valeur de consigne au moyen d'une boucle de régulation contrôlant un signal d'excitation de type à largeur d'impulsion variable commandant un courant d'excitation circulant dans un enroulement d'excitation de l'alternateur.

Le procédé dont il s'agit consiste plus précisément à limiter la charge de l'alternateur sur le moteur thermique en n'autorisant que des augmentations progressives d'un rapport cyclique courant du signal d'excitation à partir d'un rapport cyclique initial jusqu'à un rapport cyclique attendu calculé par la boucle de régulation.

Le procédé selon l'invention est remarquable en ce qu'une limitation complémentaire de la charge consiste à limiter un accroissement de ce rapport cyclique courant en fonction :
- d'au moins un paramètre du moteur thermique constitué par une accélération angulaire et/ou une vitesse de rotation du moteur thermique, et
- en fonction en outre d'une fréquence de variation de la vitesse de rotation et/ou d'une température du moteur thermique.

Selon une autre caractéristique du procédé de l'invention, l'accélération angulaire du moteur est une l'accélération de valeur négative.

Selon encore une autre caractéristique du procédé de l'invention, la limitation complémentaire est de préférence appliquée uniquement quand une différence de tension entre la tension d'alimentation et la valeur de consigne devient supérieure à une valeur prédéterminée.

L'invention concerne également un système de contrôle de la charge progressive d'un alternateur de véhicule automobile apte à la mise en oeuvre du procédé décrit ci-dessus.

Selon une architecture connue, cet alternateur est destiné à être accouplé à un moteur thermique du véhicule et comprend une boucle de régulation asservissant une tension d'alimentation d'un réseau de bord du véhicule à une valeur de consigne en contrôlant un signal d'excitation de type à largeur d'impulsion variable commandant un courant d'excitation circulant dans un enroulement d'excitation de l'alternateur.

Le système dont il s'agit est du type de ceux comprenant un bloc de correction principal fournissant en sortie un rapport cyclique de contrôle de charge progressive augmentant progressivement à partir d'un rapport cyclique initial jusqu'à un rapport cyclique attendu fourni en entrée par la boucle de régulation.

Le système de contrôle de la charge progressive d'un alternateur de véhicule automobile selon l'invention est remarquable en ce qu'il comprend au moins un bloc de correction auxiliaire fournissant en sortie un rapport cyclique auxiliaire modifiant le rapport cyclique de contrôle de charge progressive en fonction :
- d'au moins un paramètre du moteur thermique constitué par l'accélération angulaire et/ou la vitesse de rotation du moteur thermique, et
- en fonction en outre de la fréquence de variation de la vitesse de rotation et/ ou de la température du moteur thermique.

Fort avantageusement, le bloc de correction auxiliaire comprend au moins un module écrêteur du paramètre du moteur et/ ou d'une variation de ce paramètre.

Le bloc de correction auxiliaire comprend de préférence un module de régulation d'un type pris parmi le groupe: PID, non-linéaire, à gain variable, à logique floue.

Le système de contrôle de la charge progressive d'un alternateur de véhicule automobile selon l'invention comprend aussi de préférence un module de déclenchement à hystérésis activant le bloc de correction auxiliaire quand une différence de tension entre ladite tension d'alimentation et ladite valeur de consigne devient supérieure à une valeur prédéterminée.

L'invention concerne aussi un alternateur de véhicule automobile comprenant un système de contrôle de la charge progressive présentant les caractéristiques spécifiées ci-dessus.

Ces quelques spécifications essentielles auront rendu évidents pour l'homme de métier les avantages apportés par le procédé de contrôle de la charge progressive d'un alternateur de véhicule automobile selon l'invention, ainsi que par le système de contrôle et l'alternateur correspondant, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est un schéma synoptique de la boucle de régulation d'un alternateur de véhicule automobile d'un type connu de l'état de la technique.
La **Figure 2** est un schéma synoptique d'un système de contrôle de la charge progressive d'un alternateur de véhicule automobile d'un type connu de l'état de la technique.
La **Figure 3** est un schéma synoptique d'un système de contrôle de la charge progressive d'un alternateur de véhicule automobile selon un premier mode de réalisation préféré de l'invention.
La **Figure 4** est un schéma synoptique d'un système de contrôle de la charge progressive d'un alternateur de véhicule automobile selon un second mode de réalisation préféré de l'invention.

### DESCRIPTION DES MODES DE REALISATION PREFERES DE L'INVENTION.

Ainsi que cela a déjà été rappelé en préambule, des procédés et des systèmes de contrôle de la charge progressive d'un alternateur de véhicule automobile du type de ceux dont l'invention a pour but d'améliorer le fonctionnement au ralenti sont bien connus de l'état de la technique.

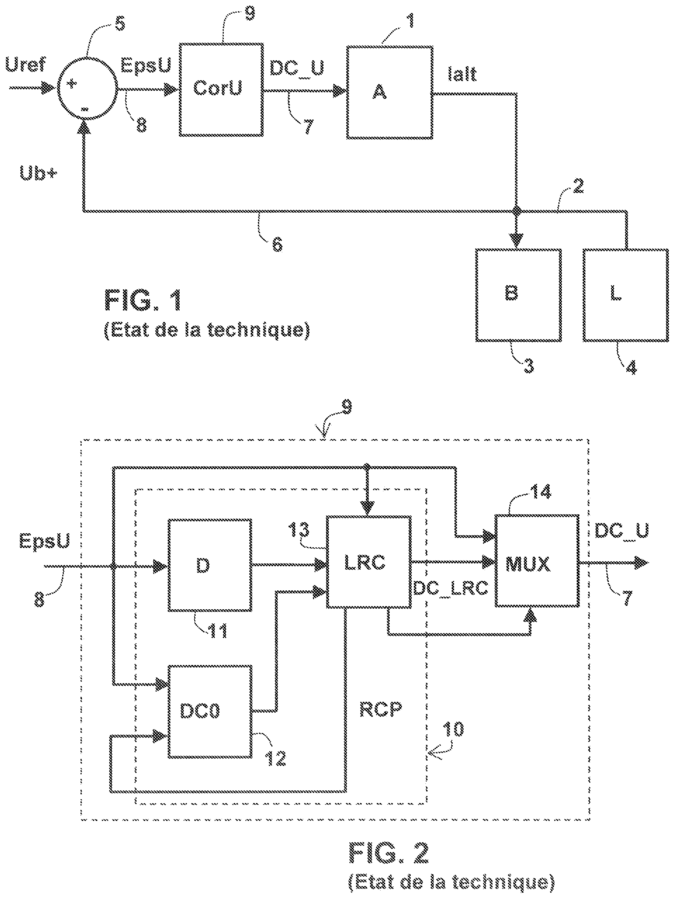

Une architecture générale d'une alimentation par un alternateur 1 d'un réseau de bord 2 d'un véhicule automobile, auquel sont connectées une batterie 3 et des charges électriques 4, est représentée sur la **Figure 1****.**

La tension d'alimentation Ub+ tend à être maintenue constante en étant comparée 5 en permanence à une valeur de consigne Uref par une alimentation en retour 6.

En fonction de l'écart entre la tension d'alimentation Ub+ et la valeur de consigne Uref, un signal d'excitation 7 de type à largeur d'impulsion variable DC_U commandant un courant d'excitation circulant dans un enroulement d'excitation de l'alternateur 1 est contrôlé par la boucle de régulation 1, 5, 6.

En régime nominal, le signal d'excitation 7 correspond au signal de demande d'excitation 8 fourni par la boucle de régulation 1, 5, 6 c'est-à-dire issu d'un comparateur 5 entre la tension d'alimentation Ub+ et la valeur de consigne Uref.

En régime transitoire, comme suite à la connexion d'une charge électrique 4 sur le réseau de bord 2, l'augmentation d'un rapport cyclique courant DC_U du signal d'excitation 7 est limitée par un système de contrôle de charge progressive 9, et n'atteint que progressivement un rapport cyclique attendu EpsU du signal de demande d'excitation 8 calculé par la boucle de régulation 1, 5, 6.

La **Figure 2** montre l'agencement d'un système de contrôle de charge progressive 9 d'un type connu de l'état de la technique.

Ce système 9 comprend un bloc de traitement numérique 10 comportant un premier module 11 de détection d'un appel de charge à partir d'un rapport cyclique attendu EpsU fourni en entrée par la boucle de régulation 1, 5, 6, un deuxième module 12 de détermination d'un rapport cyclique initial du rapport cyclique attendu EpsU, et un troisième module 13 de contrôle de charge progressive fournissant en sortie un rapport cyclique de contrôle de charge progressive DC_LRC augmentant progressivement à partir du rapport cyclique initial jusqu'au rapport cyclique attendu EpsU.

Le système 9 comprend en outre un multiplexeur 14 commandé par le troisième module 13 de contrôle de charge progressive, qui fournit en sortie un signal d'excitation 7 présentant un rapport cyclique courant DC_U égal, soit au rapport cyclique attendu EpsU, soit au rapport cyclique de contrôle de charge progressive DC_LRC fourni par le troisième module LRC 13 en cas de détection d'un appel de charge.

La description détaillée ci-dessus de ce système de contrôle de charge progressive 9 connu de l'état de la technique montre que ce système ne prend en compte aucun paramètre du moteur thermique, tel que sa vitesse de rotation.

Le but de la présente invention est d'améliorer le fonctionnement, notamment au ralenti, d'un système antérieur de contrôle de charge progressive 9 en prenant en compte au moins un paramètre de ce type.

Pour ce faire, à une limitation de charge principale effectuée de manière connue par une fonction LRC classique est ajoutée une limitation complémentaire effectuée par une boucle auxiliaire 15, dite "feed forward", venant limiter la commande d'excitation DC_U issue de la boucle de régulation 1, 5, 6 et de la fonction LRC classique 9 en fonction de paramètres moteur.

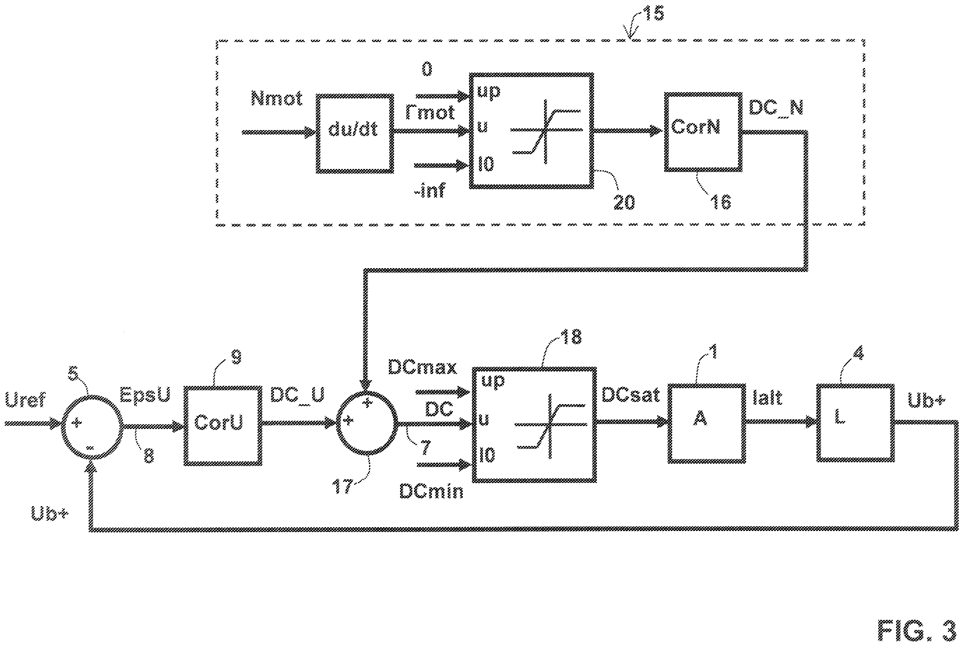

Dans un premier mode de réalisation préféré du système de contrôle de charge progressive selon l'invention, représenté schématiquement sur la **Figure 3****,** on prend en compte l'accélération angulaire Γmot du moteur thermique.

Le système maintient la tension du réseau de bord Ub+ à sa valeur de consigne Uref à condition que la décélération Γmot du moteur ne soit pas trop brutale.

Un bloc de correction auxiliaire 15 comprenant un module de régulation 16 élabore un rapport cyclique auxiliaire DC_N venant s'ajouter 17 au rapport cyclique de contrôle de charge progressive DC_U élaboré par un bloc de correction principal 9 réalisant une fonction LRC classique.

Le rapport cyclique résultant DC est ensuite saturé 18 en fonction des caractéristiques des circuits électroniques de puissance du circuit d'excitation (simple hacheur, pont mixte ou pont en H) pour donner le rapport cyclique final DCsat de commande de l'excitation de l'alternateur 1.

Dans ce schéma (**Figure 3**), la boucle auxiliaire 15 utilise l'accélération angulaire négative Γmot (décélération; tendance du moteur à caler), ce qui est le principal objectif, mais peut, alternativement, utiliser une accélération angulaire Γmot positive ("overshoot") pour aider le contrôle moteur dans sa régulation de régime.

Dans d'autres modes de réalisation de l'invention, la limitation complémentaire de la charge consiste à limiter le rapport cyclique courant DC en fonction, alternativement ou simultanément, d'autres paramètres moteur:
- la vitesse de rotation Nmot du moteur thermique (l'action est d'autant plus importante que le régime moteur est proche du ralenti);
- la température du moteur (l'action est d'autant plus importante que le moteur est froid);
- l'effet répétitif des variations de régime afin de s'adapter aux charges électriques pulsées (clignotants...) ou aux acyclismes moteur.

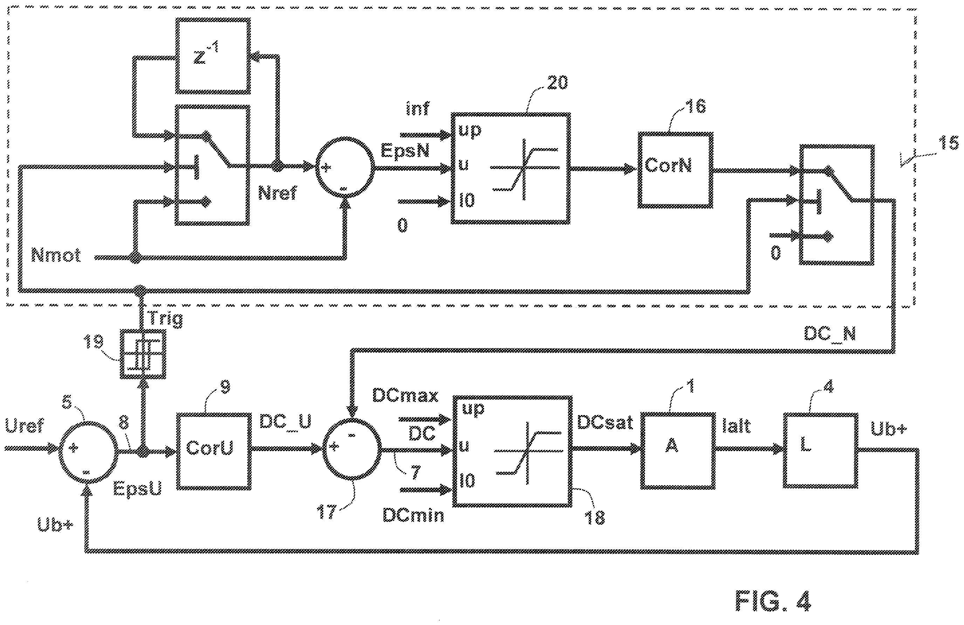

Par exemple, dans un second mode de réalisation préféré du système de contrôle de charge progressive selon l'invention, représenté schématiquement sur la **Figure 4****,** on prend en compte la vitesse de rotation Nmot du moteur thermique au lieu de l'accélération angulaire Γmot.

Le procédé selon l'invention mis en oeuvre dans ce second mode de réalisation est aussi différent en ce que l'on ne fait travailler la boucle auxiliaire 15 que lors d'un appel important de charge 4 (détecté en scrutant la chute de tension) et en régulant la vitesse de rotation de moteur Nmot à la valeur qu'elle avait juste avant la perturbation.

Pour ce faire, le système de contrôle de charge progressive selon l'invention comprend un module de déclenchement à hystérésis 19 qui élabore un signal de déclenchement Trig à partir de l'erreur EpsU de la boucle de régulation 1, 5, 6.

Quand une charge 4 est connectée au réseau de bord 2 et que la différence de tension entre la tension d'alimentation Ub+ et la valeur de consigne Uref dépasse une valeur prédéterminée, le signal de déclenchement Trig devient actif.

La vitesse de rotation Nmot est capturée et devient la vitesse de rotation de référence Nref.

Si l'erreur de la boucle de vitesse EpsN est positive cela signifie que le régime moteur est affecté par l'augmentation de couple résistant dû à l'augmentation du rapport cyclique de contrôle de charge progressive DC_U par le bloc de correction 9 en réponse à l'accroissement de charge.

Le module de régulation 16 du bloc correcteur auxiliaire 15 élabore alors un rapport cyclique auxiliaire DC_N qui est soustrait 17 au rapport cyclique de contrôle de charge progressive DC_U pour limiter le couple résistant prélevé par l'alternateur 1 et soulager le moteur thermique.

De la même manière que dans le premier mode de réalisation, le rapport cyclique résultant DC est saturé 18 en fonction des caractéristiques des circuits électroniques de puissance du circuit d'excitation.

Quand la différence de tension entre la tension d'alimentation Ub+ et la valeur de consigne Uref redevient inférieure à la valeur prédéterminée (à un seuil d'hystérésis près), le signal de déclenchement Trig redevient inactif et le rapport cyclique auxiliaire DC_N s'annule.

Dans tous les modes de réalisation du système de contrôle de charge progressive selon l'invention le module de régulation 16 est de préférence purement linéaire de type PID (pour "Proportionnel Intégral Dérivé"), mais il est alternativement de type non linéaire, à gain variable, voire à logique floue.

La dynamique des paramètres moteur Nmot, Γmot capturés, ou de leurs variations, est de préférence limitée par des modules écrêteurs 20 en entrée du module de régulation 16.

Comme il va de soi, l'invention ne se limite pas aux seuls modes de réalisation préférentiels décrits ci-dessus.

Ces autres modes de réalisation ne sortiraient pas du cadre de la présente invention dans la mesure où ils résultent des revendications ci-après.

## Revendications

1. Procédé de contrôle de la charge progressive d'un alternateur (1) de véhicule automobile destiné à être accouplé à un moteur thermique dudit véhicule et apte à produire une tension d'alimentation (Ub+) d'un réseau de bord (2) dudit véhicule asservie à une valeur de consigne (Uref) au moyen d'une boucle de régulation (1, 5, 6) contrôlant un signal d'excitation (7) de type à largeur d'impulsion variable (DC) commandant un courant d'excitation circulant dans un enroulement d'excitation dudit alternateur (1), ledit procédé assurant une limitation de ladite charge en n'autorisant que des augmentations progressives d'un rapport cyclique courant (DC) dudit signal d'excitation (7) à partir d'un rapport cyclique initial jusqu'à un rapport cyclique attendu (EpsU) calculé par ladite boucle de régulation (1, 5, 6), et assurant une limitation complémentaire de ladite charge en limitant un accroissement dudit rapport cyclique courant (DC) en fonction d'au moins un paramètre dudit moteur thermique constitué par une accélération angulaire (Γmot) et/ou une vitesse de rotation (Nmot) dudit moteur thermique, et en fonction d'une température dudit moteur thermique, **caractérisé en ce que** ladite limitation complémentaire de ladite charge est assurée en outre en limitant ledit accroissement dudit rapport cyclique courant (DC) en fonction également d'une fréquence de variation de ladite vitesse de rotation (Nmot).

2. Procédé de contrôle de la charge progressive d'un alternateur (1) de véhicule automobile selon la revendication 1, **caractérisé en ce que** ladite accélération angulaire (Γmot) est une accélération de valeur négative.

3. Procédé de contrôle de la charge progressive d'un alternateur (1) de véhicule automobile selon la revendication 1 ou 2, **caractérisé en ce que** ladite limitation complémentaire est appliquée uniquement quand une différence de tension entre ladite tension d'alimentation (Ub+) et ladite valeur de consigne (Uref) devient supérieure à une valeur prédéterminée.

4. Système de contrôle de la charge progressive d'un alternateur (1) de véhicule automobile apte à la mise en oeuvre du procédé selon l'une quelconque des revendications 1 à 3, ledit alternateur (1) étant destiné à être accouplé à un moteur thermique dudit véhicule et comprenant une boucle de régulation (1, 5, 6) asservissant une tension d'alimentation (Ub+) d'un réseau de bord (2) dudit véhicule à une valeur de consigne (Uref) en contrôlant un signal d'excitation (7) de type à largeur d'impulsion variable (DC) commandant un courant d'excitation circulant dans un enroulement d'excitation dudit alternateur (1), ledit système étant du type de ceux comprenant un bloc de correction principal (9) fournissant en sortie un rapport cyclique de contrôle de charge progressive (DC_U) augmentant progressivement à partir d'un rapport cyclique initial jusqu'à un rapport cyclique attendu (EpsU) fourni en entrée par ladite boucle de régulation (1, 5, 6), ledit système comprenant au moins un bloc de correction auxiliaire (15) fournissant en sortie un rapport cyclique auxiliaire (DC_N) modifiant ledit rapport cyclique de contrôle de charge progressive (DC_U) en fonction d'au moins un paramètre (Γmot, Nmot) dudit moteur thermique constitué par l'accélération angulaire (Γmot) et/ou la vitesse de rotation (Nmot) dudit moteur thermique, et en fonction de la température dudit moteur thermique, **caractérisé en ce que** ledit bloc de correction auxiliaire (15) fournit en sortie ledit rapport cyclique auxiliaire (DC_N) modifiant ledit rapport cyclique de contrôle de charge progressive (DC_U) en fonction également de la fréquence de variation de ladite vitesse de rotation (Nmot).

5. Système de contrôle de la charge progressive d'un alternateur (1) de véhicule automobile selon la revendication 4, **caractérisé en ce que** ledit bloc de correction auxiliaire (15) comprend au moins un module écrêteur (20) dudit paramètre (Γmot, Nmot) et/ ou d'une variation dudit paramètre.

6. Système de contrôle de la charge progressive d'un alternateur (1) de véhicule automobile selon la revendication 4 ou 5, **caractérisé en ce que** ledit bloc de correction auxiliaire (15) comprend un module de régulation (16) d'un type pris parmi le groupe: PID, non-linéaire, à gain variable, à logique floue.

7. Système de contrôle de la charge progressive d'un alternateur (1) de véhicule automobile selon l'une quelconque des revendications 4 à 6, **caractérisé en ce qu'**il comprend un module de déclenchement (19) à hystérésis activant ledit bloc de correction auxiliaire (20) quand une différence de tension entre ladite tension d'alimentation et ladite valeur de consigne devient supérieure à une valeur prédéterminée.

8. Alternateur (1) de véhicule automobile **caractérisé en ce qu'**il comprend un système de contrôle de la charge progressive selon l'une quelconque des revendications 4 à 7.

## Patentansprüche

1. Verfahren zur Überwachung des fortschreitenden Ladens eines Kraftfahrzeuggenerators (1), der dazu bestimmt ist, mit einem Wärmekraftmotor des Fahrzeugs gekoppelt zu werden und eine Speisespannung (Ub+) eines Bordnetzes (2) des Fahrzeugs erzeugen kann, die mittels einer Regelschleife (1, 5, 6) auf einen Sollwert (Uref) geregelt wird, die ein Anregungssignal (7) der Art mit variabler Impulsbreite (DC) überwacht, das einen Erregerstrom steuert, der in einer Erregerwicklung des Generators (1) fließt, wobei das Verfahren eine Begrenzung der Ladung gewährleistet, indem es nur fortschreitende Erhöhungen eines aktuellen Tastverhältnisses (DC) des Anregungssignals (7) ausgehend von einem ursprünglichen Tastverhältnis bis zu einem erwarteten Tastverhältnis (EpsU) erlaubt, das von der Regelschleife (1, 5, 6) berechnet wird, und eine komplementäre Begrenzung der Ladung gewährleistet, indem es eine Zunahme des aktuellen Tastverhältnisses (DC) abhängig von mindestens einem Parameter des Wärmekraftmotors, der aus einer Winkelbeschleunigung (Γmot) und/oder einer Drehgeschwindigkeit (Nmot) des Wärmekraftmotors besteht, und abhängig von einer Temperatur des Wärmekraftmotors begrenzt, **dadurch gekennzeichnet, dass** die komplementäre Begrenzung der Ladung außerdem gewährleistet wird, indem die Zunahme des aktuellen Tastverhältnisses (DC) ebenfalls abhängig von einer Änderungsfrequenz der Drehgeschwindigkeit (Nmot) begrenzt wird.

2. Verfahren zur Überwachung des fortschreitenden Ladens eines Kraftfahrzeuggenerators (1) nach Anspruch 1, **dadurch gekennzeichnet, dass** die Winkelbeschleunigung (Γmot) eine Beschleunigung mit negativem Wert ist.

3. Verfahren zur Überwachung des fortschreitenden Ladens eines Kraftfahrzeuggenerators (1) nach Anspruch 1 oder 2, **dadurch gekennzeichnet, dass** die komplementäre Begrenzung nur angewendet wird, wenn eine Spannungsdifferenz zwischen der Speisespannung (Ub+) und dem Sollwert (Uref) größer wird als ein vorbestimmter Wert.

4. Überwachungssystem des fortschreitenden Ladens eines Kraftfahrzeuggenerators (1), das für die Durchführung des Verfahrens nach einem der Ansprüche 1 bis 3 geeignet ist, wobei der Generator (1) dazu bestimmt ist, mit einem Wärmekraftmotor des Fahrzeugs gekoppelt zu werden und eine Regelschleife (1, 5, 6) enthält, die eine Speisespannung (Ub+) eines Bordnetzes (2) des Fahrzeugs auf einen Sollwert (Uref) regelt, indem sie ein Anregungssignal (7) der Art mit variabler Impulsbreite (DC) überwacht, das einen Erregerstrom steuert, der in einer Erregerwicklung des Generators (1) fließt, wobei das System von der Art ist, die einen Hauptkorrekturblock (9) enthält, der am Ausgang ein Überwachungstastverhältnis einer fortschreitenden Ladung (DC_U) liefert, das fortschreitend ausgehend von einem ursprünglichen Tastverhältnis bis zu einem erwarteten Tastverhältnis (EpsU) zunimmt, das am Eingang von der Regelschleife (1, 5, 6) geliefert wird, wobei das System mindestens einen Hilfskorrekturblock (15) enthält, der am Ausgang ein Hilfstastverhältnis (DC_N) liefert, das das Überwachungstastverhältnis einer fortschreitenden Ladung (DC_U) abhängig von mindestens einem Parameter (Γmot, Nmot) des Wärmekraftmotors, der aus der Winkelbeschleunigung (Γmot) und/oder der Drehgeschwindigkeit (Nmot) des Wärmekraftmotors besteht, und abhängig von der Temperatur des Wärmekraftmotors ändert, **dadurch gekennzeichnet, dass** der Hilfskorrekturblock (15) am Ausgang das Hilfstastverhältnis (DC_N) liefert, das das Überwachungstastverhältnis einer fortschreitenden Ladung (DC_U) ebenfalls abhängig von der Änderungsfrequenz der Drehgeschwindigkeit (Nmot) ändert.

5. Überwachungssystem des fortschreitenden Ladens eines Kraftfahrzeuggenerators (1) nach Anspruch 4, **dadurch gekennzeichnet, dass** der Hilfskorrekturblock (15) mindestens ein Begrenzermodul (20) des Parameters (Γmot, Nmot) und/oder einer Änderung des Parameters enthält.

6. Überwachungssystem des fortschreitenden Ladens eines Kraftfahrzeuggenerators (1) nach Anspruch 4 oder 5, **dadurch gekennzeichnet, dass** der Hilfskorrekturblock (15) ein Regelmodul (16) einer Art enthält, die aus der Gruppe genommen wird: PID, nicht-linear, mit variabler Verstärkung, mit Fuzzy-Logik.

7. Überwachungssystem des fortschreitenden Ladens eines Kraftfahrzeuggenerators (1) nach einem der Ansprüche 4 bis 6, **dadurch gekennzeichnet, dass** es ein Auslösemodul (19) mit Hysterese enthält, das den Hilfskorrekturblock (20) aktiviert, wenn eine Spannungsdifferenz zwischen der Speisespannung und dem Sollwert größer wird als ein vorbestimmter Wert.

8. Generator (1) eines Kraftfahrzeugs, **dadurch gekennzeichnet, dass** er ein Überwachungssystem des fortschreitenden Ladens nach einem der Ansprüche 4 bis 7 enthält.

## Claims

1. Method for controlling the gradual loading of a motor vehicle alternator (1) that is intended to be coupled to a combustion engine of said vehicle and capable of producing a supply voltage (Ub+) for an on-board network (2) of said vehicle, which voltage is slaved to a setpoint value (Uref) by means of a feedback loop (1, 5, 6) controlling a variable pulse width (DC) excitation signal (7) controlling an excitation current flowing through an excitation winding of said alternator (1), said method limiting said load by allowing only gradual increases in a current duty cycle (DC) of said excitation signal (7) from an initial duty cycle to an expected duty cycle (EpsU) calculated by said feedback loop (1, 5, 6), and additionally limiting said load by limiting an increase in said current duty cycle (DC) according to at least one parameter of said combustion engine consisting of an angular acceleration (Γmot) and/or a speed of rotation (Nmot) of said combustion engine, and according to a temperature of said combustion engine, **characterized in that** said additional limiting of said load is further achieved by limiting said increase in said current duty cycle (DC) also according to a frequency of variation of said speed of rotation (Nmot).

2. Method for controlling the gradual loading of a motor vehicle alternator (1) according to Claim 1, **characterized in that** said angular acceleration (Γmot) is an acceleration having a negative value.

3. Method for controlling the gradual loading of a motor vehicle alternator (1) according to Claim 1 or 2, **characterized in that** said additional limiting is applied only when a difference in voltage between said supply voltage (Ub+) and said setpoint value (Uref) becomes higher than a predetermined value.

4. System for controlling the gradual loading of a motor vehicle alternator (1) capable of implementing the method according to any one of Claims 1 to 3, said alternator (1) being intended to be coupled to a combustion engine of said vehicle and comprising a feedback loop (1, 5, 6) slaving a supply voltage (Ub+) for an on-board network (2) of said vehicle to a setpoint value (Uref) by controlling a variable pulse width (DC) excitation signal (7) controlling an excitation current flowing through an excitation winding of said alternator (1), said system being of the type of those comprising a main correction block (9) delivering, as output, a duty cycle for controlling gradual loading (DC_U) gradually increasing from an initial duty cycle to an expected duty cycle (EpsU) delivered as input by said feedback loop (1, 5, 6), said system comprising at least one auxiliary correction block (15) delivering, as output, an auxiliary duty cycle (DC_N) that modifies said duty cycle for controlling gradual loading (DC_U) according to at least one parameter (Γmot, Nmot) of said combustion engine consisting of the angular acceleration (Γmot) and/or the speed of rotation (Nmot) of said combustion engine, and according to the temperature of said combustion engine, **characterized in that** said auxiliary correction block (15) delivers, as output, said auxiliary duty cycle (DC_N) that modifies said duty cycle for controlling gradual loading (DC_U) also according to the frequency of variation of said speed of rotation (Nmot).

5. System for controlling the gradual loading of a motor vehicle alternator (1) according to Claim 4, **characterized in that** said auxiliary correction block (15) comprises at least one clipper module (20) for clipping said parameter (Γmot, Nmot) and/or a variation of said parameter.

6. System for controlling the gradual loading of a motor vehicle alternator (1) according to Claim 4 or 5, **characterized in that** said auxiliary correction block (15) comprises a controller module (16) chosen from the group: PID controller, nonlinear controller, variable gain controller, fuzzy logic controller.

7. System for controlling the gradual loading of a motor vehicle alternator (1) according to any one of Claims 4 to 6, **characterized in that** it comprises a hysteresis trigger module (19) that activates said auxiliary correction block (20) when a difference in voltage between said supply voltage and said setpoint value becomes higher than a predetermined value.

8. Motor vehicle alternator (1), **characterized in that** it comprises a system for controlling gradual loading according to any one of Claims 4 to 7.
